# EUROPÄISCHE PATENTSCHRIFT

(11) **EP 3 237 138 B1**
(45) Veröffentlichungstag und Bekanntmachung des Hinweises auf die Patenterteilung: **02.10.2019**
(21) Anmeldenummer: 15820142.6
(22) Anmeldetag: 22.12.2015
(51) Int. Cl.: B23D 61/04, B23D 65/00, B28D 1/04, B28D 1/12

(54) **BOHRRING FÜR EINE KERNBOHRKRONE UND VERFAHREN ZUR HERSTELLUNG EINES SOLCHEN BOHRRINGES**
DRILL RING FOR A CORE DRILL BIT AND METHOD FOR PRODUCING SUCH A DRILL RING
BAGUE DE FORAGE POUR UNE COURONNE DE CAROTTAGE ET PROCÉDÉ DE FABRICATION D'UNE TELLE BAGUE DE FORAGE

(30) Priorität: 22.12.2014 EP 14199723
(43) Veröffentlichungstag der Anmeldung: 01.11.2017
(73) Patentinhaber: Hilti Aktiengesellschaft, 9494 Schaan (LI)
(72) Erfinder: MUELLER, Matthias, 9470 Buchs (CH); SONDEREGGER, Marcel, 9436 Balgach (CH)
(74) Vertreter: Hilti Aktiengesellschaft Corporate Intellectual Property
(86) Internationale Anmeldenummer: PCT/EP2015/080930
(87) Internationale Veröffentlichungsnummer: WO 2016/102539

(56) Entgegenhaltungen:
- WO-A1-91/10750
- JP-A- H0 671 638
- JP-A- H05 169 307
- US-A- 5 316 416
- US-A1- 2006 130 823

## Beschreibung

### Technisches Gebiet

Die vorliegende Erfindung betrifft einen Bohrring für eine Kernbohrkrone gemäß dem Oberbegriff des Anspruchs 1 sowie ein Verfahren zur Herstellung eines solchen Bohrringes gemäß dem Oberbegriff des Anspruchs 7.

### Stand der Technik

Bei Diamantwerkzeugen, die als Kernbohrkronen ausgebildet sind, wird zwischen Kernbohrkronen mit einem geschlossenen Bohrring und segmentierten Kernbohrkronen mit einzelnen Schneidsegmenten unterschieden. Kernbohrkronen bestehen aus einem Bearbeitungsabschnitt, einem zylinderförmigen Bohrschaft und einem Aufnahmeabschnitt mit Einsteckende. Die Kernbohrkrone wird über das Einsteckende in der Werkzeugaufnahme eines Kernbohrgerätes befestigt und im Bohrbetrieb vom Kernbohrgerät um eine Drehachse angetrieben.

Geschlossene Bohrringe werden aus einem Pulvergemisch mit statistisch verteilten Diamantpartikeln hergestellt. Das Pulvergemisch wird in eine Werkzeugform gefüllt und zu einem Grünteil gepresst; das Grünteil wird unter Temperatur- und Druckeinwirkung zu einem geschlossenen Bohrring gesintert.

Bei der Herstellung von Schneidsegmenten für segmentierte Kernbohrkronen haben sich im Profibereich Verfahren etabliert, bei denen die Schneidsegmente als Grünteile aus eingekapselten Diamantpartikeln aufgebaut werden. Einzelne Diamantpartikel sind von einem Pulvergemisch umhüllt und bilden die eingekapselten Diamantpartikel. Die eingekapselten Diamantpartikel werden in eine Werkzeugform gefüllt und zu einem Grünteil gepresst; die Grünteile werden anschließend unter Temperatur- und Druckeinwirkung zu fertigen Schneidsegmenten gesintert.

JPH 05-169307 offenbart einen Bohrring für eine Kernbohrkrone mit mindestens zwei Ringabschnitten, die aus einem gesinterten Pulvergemisch und Diamantpartikeln aufgebaut sind und die an den Seitenkanten miteinander verbunden sind. Die Ringabschnitte umfassen n erste Ringabschnitte und n zweite Ringabschnitte, die entlang einer Umfangsrichtung des Bohrringes abwechselnd hintereinander angeordnet sind. Die ersten Ringabschnitte sind aus einem gesinterten ersten Pulvergemisch und ersten Diamantpartikeln aufgebaut und die zweiten Ringabschnitte sind aus einem gesinterten zweiten Pulvergemisch aufgebaut. Nachteilig ist, dass die zweiten Ringabschnitte keine Diamantpartikel enthalten.

WO 91/10750 A1 offenbart ein Verfahren zur Herstellung eines Bohrringes für eine Kernbohrkrone, wobei mindestens zwei Grünteile aus einem Pulvergemisch und Diamantpartikeln aufgebaut werden, die Grünteile zu Ringabschnitten umgeformt werden und die Ringabschnitte anschliessend zusammengesetzt werden.

### Darstellung der Erfindung

Die Aufgabe der vorliegenden Erfindung besteht darin, die Technologie der eingekapselten Diamantpartikel auf geschlossene Bohrringe anzuwenden und die Bearbeitungsqualität, die mit den so hergestellten Bohrringen erreichbar ist, gegenüber Bohrringen mit statistisch verteilten Diamantpartikeln zu erhöhen.

Diese Aufgabe wird bei dem eingangs genannten Bohrring für eine Kernbohrkrone erfindungsgemäß durch die Merkmale des unabhängigen Anspruchs 1 und bei dem eingangs genannten Verfahren zur Herstellung eines Bohrringes durch die Merkmale des unabhängigen Anspruchs 7 gelöst. Vorteilhafte Weiterbildungen sind in den abhängigen Ansprüchen angegeben.

Erfindungsgemäß ist beim Bohrring vorgesehen, dass die ersten Ringabschnitte aus einem gesinterten ersten Pulvergemisch und ersten Diamantpartikeln aufgebaut sind und die zweiten Ringabschnitte aus einem gesinterten zweiten Pulvergemisch und zweiten Diamantpartikeln aufgebaut sind. Der Aufbau des Bohrringes aus ersten und zweiten Ringabschnitten ermöglicht die Anpassung an unterschiedliche zu bearbeitende Untergründe. Beim Kernbohren in Betonwerkstoffe mit eingebetteten Armierungseisen, die auch als armierte Betonwerkstoffe bezeichnet werden, trifft ein Bohrring beispielsweise auf unterschiedliche Untergründe in Form von Beton und Armierungseisen. Die Eigenschaften der ersten Ringabschnitte können an einen ersten Untergrund, beispielsweise Beton, und die Eigenschaften der zweiten Ringabschnitte an einen zweiten Untergrund, beispielsweise Armierungseisen, angepasst werden. Die Eigenschaften der Ringabschnitte lassen sich über das Pulvergemisch und die Diamantpartikel einstellen. Bei den Diamantpartikeln können der mittlere Diamantdurchmesser, die Diamantverteilung und die Anzahl an Diamantpartikeln verändert werden.

Bevorzugt stimmen das erste Pulvergemisch der ersten Ringabschnitte und das zweite Pulvergemisch der zweiten Ringabschnitte überein. Besonders bevorzugt weisen die ersten Diamantpartikel der ersten Ringabschnitte und die zweiten Diamantpartikel der zweiten Ringabschnitte die gleiche Diamantverteilung und den gleichen mittleren Diamantdurchmesser auf. Durch die Verwendung des gleichen Pulvergemisches und der gleichen Diamantpartikel für die ersten und zweiten Ringabschnitte kann der apparative Aufwand bei der Herstellung des Bohrringes reduziert werden; es werden nur ein Pulvergemisch und eine Sorte an Diamantpartikeln benötigt.

In einer bevorzugten Ausführung ist zwischen den Ringabschnitten mindestens ein Wasserschlitz vorgesehen. Während der Bearbeitung mit dem Bohrring muss Kühlflüssigkeit an die Bearbeitungsstelle transportiert werden; die Kühlflüssigkeit strömt über die Wasserschlitze an die Bearbeitungsstelle und sorgt für eine ausreichende Kühlung des Bohrringes.

Besonders bevorzugt erstreckt sich der mindestens eine Wasserschlitz über eine Höhe zwischen 1/3 und 5/6 der Gesamthöhe des Bohrringes. Bei Bohrringen, die mit dem Bohrschaft verschweißt werden, wird der Anbindungsbereich ohne Diamanten aufgebaut und ist für die Bearbeitung ungeeignet. Für die Bearbeitung von Untergründen eignet sich die mit Diamantpartikeln versehene Matrixzone, die ca. 5/6 der Gesamthöhe des Bohrringes darstellt.

Besonders bevorzugt wird die Höhe des mindestens einen Wasserschlitzes auf 2/3 der Gesamthöhe des Bohrringes eingestellt. Bei einem Anteil von 2/3 der Gesamthöhe kann eine ausreichende Festigkeit des fertigen Bohrringes sichergestellt werden. Während der Bearbeitung mit dem Bohrring muss Kühlflüssigkeit an die Bearbeitungsstelle transportiert werden; daher werden die Wasserschlitze im Bohrring so lang wie möglich ausgebildet.

Besonders bevorzugt weisen die Ringabschnitte eine oder mehrere Bohrungen auf, die die Innenseite und Außenseite des Bohrringes verbinden. Dabei ist die Bohrung besonders bevorzugt zumindest teilweise unterhalb des mindestens einen Wasserschlitzes angeordnet. Die zusätzliche Bohrung stellt eine ausreichende Kühlung des Bohrringes sicher, wenn der mindestens eine Wasserschlitz abgetragen ist.

Das erfindungsgemäße Verfahren zur Herstellung eines solchen geschlossenen Bohrringes umfasst die Schritte:
▪ mindestens zwei Grünteile werden aus eingekapselten Diamantpartikeln aufgebaut, wobei Diamantpartikel von einem Pulvergemisch umhüllt sind,
▪ die Grünteile werden unter Druckeinwirkung zu Ringabschnitten umgeformt und
▪ die Ringabschnitte werden ringförmig zusammengesetzt und unter Temperatureinwirkung zu einem geschlossenen Bohrring gesintert.

Das erfindungsgemäße Verfahren umfasst drei Verfahrensabschnitte, die unterschiedliche Technologien nutzen. Der Bohrring wird beim erfindungsgemäßen Verfahren nicht als geschlossener Bohrring aufgebaut, sondern wird aus zwei oder mehr Ringabschnitten zusammengesetzt, die durch Sintern verbunden werden.

Im ersten Verfahrensabschnitt werden mehrere Grünteile aus eingekapselten Diamantpartikeln aufgebaut, wobei Diamantpartikel von einem Pulvergemisch umhüllt sind und die eingekapselten Diamantpartikel bilden. Unter dem Begriff "Pulvergemisch" werden feinkörnige Pulvermischungen und granulierte Pulvermischungen zusammengefasst. Als Pulvergemisch können Eisen-, Kobalt- und/oder Bronzepulver verwendet werden; durch Zumischen von Zusätzen, wie beispielsweise Wolframkarbid, können die Eigenschaften der Bohrringe (Verschleißwiderstand, Lebensdauer, Schnittfreudigkeit) beeinflusst werden. Außerdem hat die Zusammensetzung des Pulvergemisches Einfluss auf die Sintertemperatur. Unter dem Begriff "Diamantpartikel" werden einzelne Diamantpartikel und beschichtete Diamantpartikel zusammengefasst.

Die Grünteile weisen die geometrische Form eines geraden Prismas mit einer mehreckigen Grundfläche auf. Die prismenförmigen Grünteile werden im zweiten Verfahrensabschnitt unter Druckeinwirkung zu Ringabschnitten umgeformt. Das Umformen der Grünteile findet bei Temperaturen statt, die unterhalb der Schmelztemperatur des Pulvergemisches liegen. Im dritten Verfahrensabschnitt werden die Ringabschnitte ringförmig zusammengesetzt und unter Temperatureinwirkung zu einem geschlossenen Bohrring gesintert. Beim Sintern der Ringabschnitte erfolgen zum einen eine Verdichtung der einzelnen Ringabschnitte und zum anderen eine Verbindung zwischen benachbarten Ringabschnitten.

Als Umformverfahren eignen sich Kaltpressen, Warmpressen sowie vergleichbare Verfahren. Beim Kaltpressen wird ein Grünteil unter einem hohen Druck in die vorgegebene Form gebracht. In einer Kaltpresse erwärmt der Werkstoff sich zwar, allerdings findet die Umformung in einem Temperaturbereich statt, in dem keine Rekristallisation auftritt; der Werkstoff verformt sich, ohne dass die Festigkeit deutlich abnimmt. Beim Warmpressen, das auch als Gesenkschmieden bezeichnet wird, wird ein Grünteil unter einem hohen Druck und dem Zusatz von Wärme in seine endgültige Form gebracht. Zusätzlich zur Form verändert das Schmiedestück seine Materialstruktur; es wird fester und erhält dadurch ein dichteres Gefüge und eine homogene Oberfläche.

Sintern ist ein Verfahren zur Herstellung von Werkstoffen, bei dem ein Pulver oder ein Grünteil (gepresstes Pulver) auf Temperaturen unterhalb der Schmelztemperatur erhitzt werden, um die Festigkeit durch Verbinden der einzelnen Pulverpartikel zu erhöhen. Der Sintervorgang läuft in drei Stadien ab, in denen sich die Porosität und das Volumen des Grünteils deutlich verringern. Im ersten Stadium des Sinterns erfolgt lediglich eine Verdichtung des Grünteils, wohingegen sich im zweiten Stadium die offene Porosität deutlich verringert. Die Festigkeit der Sinterkörper beruht auf den, im dritten Stadium gebildeten Sinterverbindungen (Anschmelzungen zwischen den Pulverpartikeln), die durch Oberflächendiffusion zwischen den Pulverpartikeln entstehen. Heißpressen ist ein spezielles Sinterverfahren, bei dem neben Temperatur auch äußerer Druck aufgewendet wird.

In einer bevorzugten Variante wird der Bohrring aus einer Anzahl von n, n ≥ 1 ersten Grünteilen, die zu ersten Ringabschnitten umgeformt werden, und n zweiten Grünteilen, die zu zweiten Ringabschnitten umgeformt werden, aufgebaut, wobei die ersten und zweiten Ringabschnitte entlang einer Umfangsrichtung des Bohrringes abwechselnd hintereinander angeordnet werden. Die Herstellung des Bohrringes aus ersten und zweiten Grünteilen ermöglicht die Anpassung des Bohrringes an unterschiedliche zu bearbeitende Untergründe, beispielsweise an Beton und Armierungseisen in armierten Betonwerkstoffen.

Besonders bevorzugt werden die ersten Grünteile aus eingekapselten ersten Diamantpartikeln, die ein erstes Pulvergemisch und erste Diamantpartikel enthalten, hergestellt und die zweiten Grünteile werden aus eingekapselten zweiten Diamantpartikeln, die ein zweites Pulvergemisch und zweite Diamantpartikel enthalten, hergestellt. Die Anpassung des Bohrringes an den zu bearbeitenden Untergrund kann über die Auswahl des Pulvergemisches und die Auswahl der Diamantpartikel erfolgen. Beim Pulvergemisch kann die Zusammensetzung der Werkstoffe variiert werden; bei den Diamantpartikeln können der mittlere Diamantdurchmesser, die Diamantverteilung und die Anzahl der Diamantpartikel variiert werden.

In einer alternativen Variante wird der Bohrring aus einer Anzahl von n ≥ 2 gleichen Grünteilen aufgebaut, wobei die Grünteile zu Ringabschnitten umgeformt und entlang einer Umfangsrichtung des Bohrringes hintereinander angeordnet werden. Durch die Verwendung von gleichen Grünteilen kann der apparative Aufwand beim Aufbau der Grünteile reduziert werden; es werden nur ein Pulvergemisch und eine Sorte an Diamantpartikeln benötigt.

Die Grünteile weisen die geometrische Form eines geraden Prismas mit einer mehreckigen Grundfläche auf. Als mehreckige Grundflächen eignen sich rechteckige Grundflächen, fünfeckige Grundflächen und sechseckige Grundflächen.

In einer ersten Variante werden die Grünteile mit rechteckigen Grundflächen aufgebaut. Die rechteckige Grundfläche stellt die einfachste Geometrie dar, um Bohrringe aus mehreren Ringabschnitten herzustellen. Die Ringabschnitte werden an den Seitenkanten mit den benachbarten Ringabschnitten verbunden.

In einer zweiten Variante werden die Grünteile mit fünfeckigen Grundflächen aufgebaut, wobei die Grundflächen ein Rechteck und ein Trapez mit zwei rechten Innenwinkeln aufweisen. Im Bereich des geneigten Trapezschenkels wird beim Sintern mit dem benachbarten Ringabschnitt ein Wasserschlitz erzeugt. Mit einer solchen fünfeckigen Grundfläche wird bei einem Bohrring mit 2n, n ≥ 1 Ringabschnitten eine Anzahl von n Wasserschlitzen erzeugt.

In einer dritten Variante werden die Grünteile mit sechseckigen Grundflächen aufgebaut, wobei die Grundflächen ein Rechteck und ein gleichschenkliges Trapez aufweisen. Im Bereich der geneigten Trapezschenkel werden beim Sintern mit den benachbarten Ringabschnitten Wasserschlitze erzeugt. Mit einer solchen sechseckigen Grundfläche wird bei einem Bohrring mit n, n ≥ 2 Ringabschnitten eine Anzahl von n Wasserschlitzen erzeugt.

In einer bevorzugten Weiterentwicklung werden die Ringabschnitte beim Sintern einer Temperatur- und Druckeinwirkung unterzogen. Bei Sinterverfahren mit Temperatur- und Druckeinwirkung, wie dem Heißpressen, läuft das Sintern schneller und bei niedrigerer Temperatur ab als bei Sinterverfahren ohne Druckeinwirkung, wie dem freien Sintern. Da thermische Diamantschädigungen bereits bei 600 °C auftreten, kann eine niedrigere Sintertemperatur ein qualitativer Vorteil sein.

Besonders bevorzugt werden die Ringabschnitte durch die Druckeinwirkung beim Sintern einer zusätzlichen äußeren Formgebung unterzogen. Für die Bearbeitung verschiedener Untergründe haben sich spezielle Dachformen als geeignet erwiesen. Diese Dachformen können durch Druckeinwirkung beim Sintern erzeugt werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, im Rahmen der Ansprüche. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Kernbohrkrone bestehend aus einem Bohrring, einem zylinderförmigen Bohrschaft und einem Aufnahmeabschnitt;
- FIG. 2: einen erfindungsgemäßen Bohrring mit vier Ringabschnitten und vier Wasserschlitzen zwischen den Ringabschnitten;
- FIGN. 3A-D: die Herstellung des Bohrringes der FIG. 2 aus ersten und zweiten Grünteilen mit einer sechseckigen Grundfläche (FIG. 3A), wobei die Grünteile zu ersten und zweiten Ringabschnitten umgeformt werden (FIG. 3B), die Ringabschnitte abwechselnd hintereinander angeordnet werden (FIG. 3C) und zu einem geschlossenen Bohrring gesintert werden (FIG. 3D); und
- FIGN. 4A-C: Grünteile mit einer rechteckigen Grundfläche (FIG. 4A), einer fünfeckigen Grundfläche (FIG. 4B) und einer sechseckigen Grundfläche (FIG. 4C).

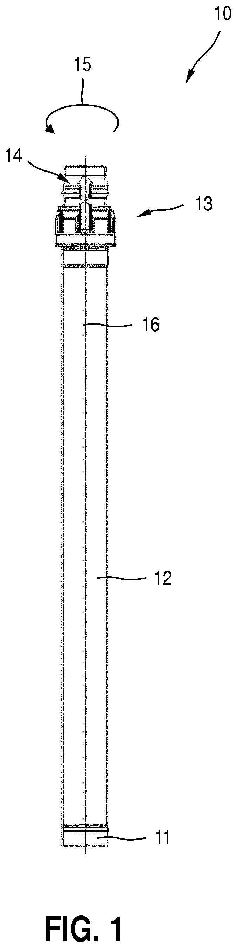

**FIG. 1** zeigt eine Kernbohrkrone **10** mit einem Bohrring **11,** einem zylinderförmigen Bohrschaft **12** und einem Aufnahmeabschnitt **13** mit Einsteckende **14.** Die Kernbohrkrone 10 wird über das Einsteckende 14 in der Werkzeugaufnahme eines Kernbohrgerätes befestigt und im Bohrbetrieb vom Kernbohrgerät in einer Drehrichtung **15** um eine Drehachse **16** angetrieben, wobei die Drehachse 16 koaxial zur Zylinderachse der Kernbohrkrone 10 verläuft.

Der Bohrring 11 ist mit dem Bohrschaft 12 verschweißt, verlötet, verschraubt oder in einer anderen geeigneten Befestigungsart am Bohrschaft 12 befestigt. Um den Bohrring 11 mit dem Bohrschaft 12 verschweißen zu können, muss der Verbindungsbereich zwischen Bohrring 11 und Bohrschaft 12 aus einem schweißbaren Material aufgebaut sein und darf keine Diamanten enthalten, da Diamanten nicht schweißbar sind.

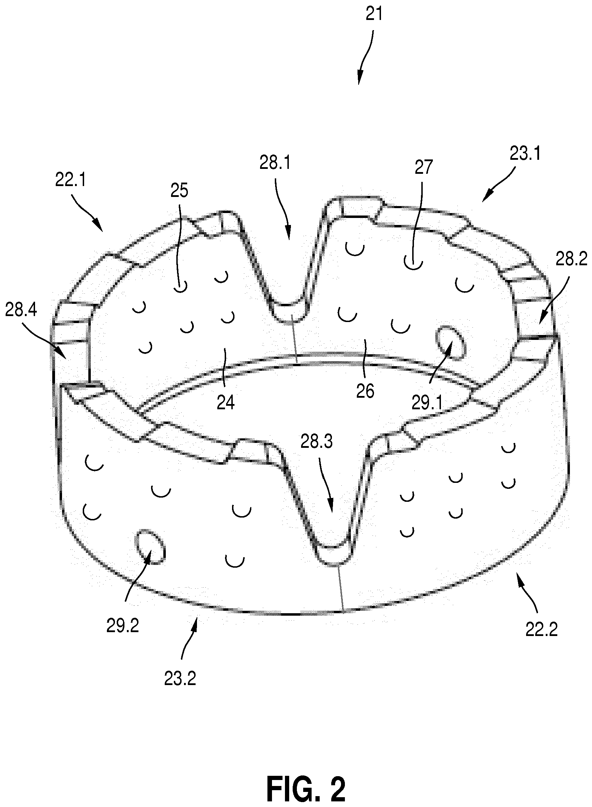

**FIG. 2** zeigt eine erste Ausführungsform eines erfindungsgemäßen Bohrringes **21,** der aus vier Ringabschnitten zusammengesetzt wurde. Die Ringabschnitte lassen sich in zwei erste Ringabschnitte **22.1, 22.2** und zwei zweite Ringabschnitte **23.1, 23.2** unterteilen, die entlang einer Umfangsrichtung des Bohrringes 21 abwechselnd hintereinander angeordnet sind. Die ersten Ringabschnitte 22.1, 22.2 bestehen aus einem ersten Pulvergemisch **24** und ersten Diamantpartikeln **25** und die zweiten Ringabschnitte 23.1, 23.2 bestehen aus einem zweiten Pulvergemisch **26** und zweiten Diamantpartikeln **27.**

Zwischen den Ringabschnitten 22.1, 23.1, 22.2, 23.2 sind vier Wasserschlitze **28.1, 28.2, 28.3, 28.4** ausgebildet, über die eine Kühlflüssigkeit an die Bearbeitungsstelle transportiert wird. Die Wasserschlitze 28.1-28.4 erstrecken sich über eine Höhe von ca. 2/3 der Gesamthöhe des Bohrringes 21. Um die Funktionsfähigkeit des Bohrringes 21 auch dann sicherzustellen, wenn die Wasserschlitze 28.1-28.4 abgetragen sind, weist der Bohrring 21 zusätzlich zwei Bohrungen **29.1, 29.2** auf, über die Kühlflüssigkeit an die Bearbeitungsstelle transportiert wird.

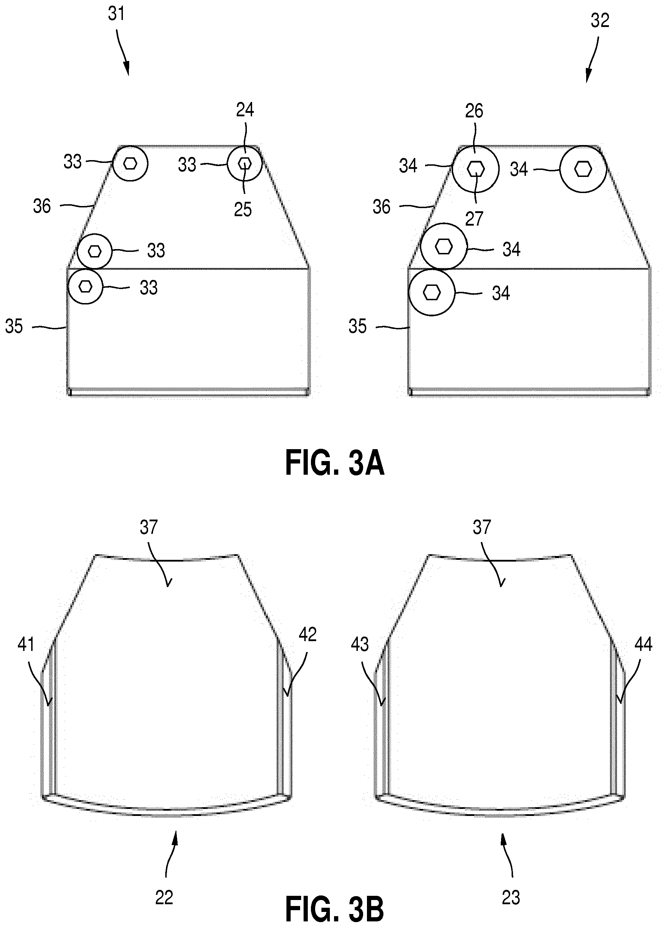

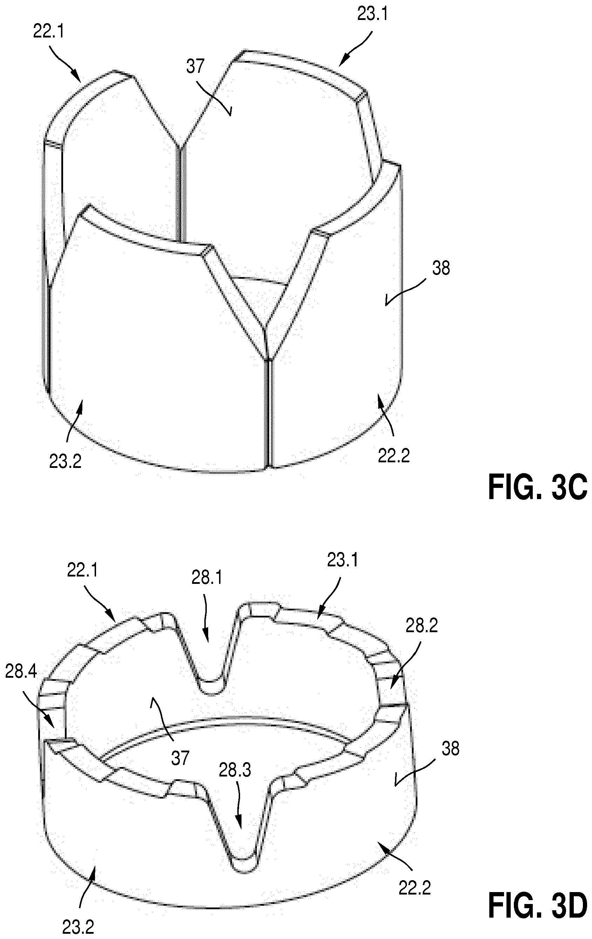

**FIGN. 3A-D** zeigen die Herstellung des Bohrringes 21 der FIG. 2 aus zwei ersten Grünteilen **31** und zwei zweiten Grünteilen **32** (FIG. 3A), die zu den ersten Ringabschnitten 22.1, 22.2 und zweiten Ringabschnitten 23.1, 23.2 umgeformt werden (FIG. 3B). Die Ringabschnitte werden entlang der Umfangsrichtung des Bohrringes 21 abwechselnd hintereinander angeordnet (FIG. 3C) und unter Temperatur- und Druckeinwirkung zu einem geschlossenen Bohrring gesintert (FIG. 4D).

FIG. 3A zeigt das erste Grünteil 31, das aus dem ersten Pulvergemisch 24 und den ersten Diamantpartikeln 25 aufgebaut ist, und das zweite Grünteil 32, das aus dem zweiten Pulvergemisch 26 und den zweiten Diamantpartikeln 27 aufgebaut ist. Die ersten Diamantpartikel 25 sind vom ersten Pulvergemisch 24 umhüllt und bilden erste eingekapselte Diamantpartikel **33** und die zweiten Diamantpartikel 27 sind vom zweiten Pulvergemisch 26 umhüllt und bilden zweite eingekapselte Diamantpartikel **34.** Die Grundfläche der Grünteile 31, 32 ist sechseckig ausgebildet und besteht aus einem Rechteck **35** und einem angrenzenden gleichschenkligen Trapez **36.** Im Bereich der Trapezschenkel werden beim Sintern durch zusätzliche Druckeinwirkung die Wasserschlitze 28.1-28.4 ausgebildet, über die Kühlflüssigkeit an die Bearbeitungsstelle transportiert wird.

FIG. 3B zeigt den ersten Ringabschnitt 22, der aus dem ersten Grünteil 31 der FIG. 3A unter Druckeinwirkung erzeugt wurde, und den zweiten Ringabschnitt 23, der aus dem zweiten Grünteil 32 der FIG. 3A unter Druckeinwirkung erzeugt wurde. Die Innenseiten **37** der Ringabschnitte 22, 23 weisen eine konkave Krümmung auf, die gegenüber liegenden Außenseiten **38** eine konvexe Krümmung.

Der erste Ringabschnitt 22 weist eine erste und zweite Seitenkante **41, 42** auf, die beim Sintern mit einer ersten und zweiten Seitenkante **43, 44** des zweiten Ringabschnittes 23 verbunden werden. Dabei werden die erste Seitenkante 41 des ersten Ringabschnittes 22 mit der zweiten Seitenkante 44 des zweiten Ringabschnittes 23 und die zweite Seitenkante 42 des ersten Ringabschnittes 22 mit der ersten Seitenkante 43 des zweiten Ringabschnittes 23 verbunden. Beim Bohrring 21 mit zwei ersten und zweiten Ringabschnitten 22.1, 22.2, 23.1, 23.2 werden jeweils die ersten und zweiten Seitenkanten der benachbarten Ringabschnitte miteinander verbunden.

FIG. 3C zeigt die ersten und zweiten Ringabschnitte 22.1, 22.2, 23.1, 23.2, die entlang der Umfangsrichtung des Bohrringes 21 hintereinander angeordnet sind und mit den Seitenkanten 41, 42, 43, 44 aneinander angrenzen. Die Ringabschnitte 22.1, 23.1, 22.2, 23.2 bilden einen geschlossenen Bohrring und werden in der in FIG. 3C gezeigten Anordnung in einer Heißpresse weiter bearbeitet.

FIG. 3D zeigt den Bohrring nach dem Heißpressen. Beim Heißpressen werden die Ringabschnitte 22.1, 23.1, 22.2, 23.2 einer Temperatur- und Druckeinwirkung unterzogen. Die Temperatureinwirkung sorgt dafür, dass das Pulvergemisch 24, 26 in den Ringabschnitten gesintert wird und die Ringabschnitte 22.1, 23.1, 22.2, 23.2 an den Seitenkanten 41, 42, 43, 44 miteinander verbunden werden. Durch Druckeinwirkung in axialer Richtung erfolgt eine Kompression der Ringabschnitte, die zu einer Verdichtung der Ringabschnitte führt. Das Heißpressen erfolgt in einer Matrize, die die endgültige Form des Bohrringes 21 festlegt.

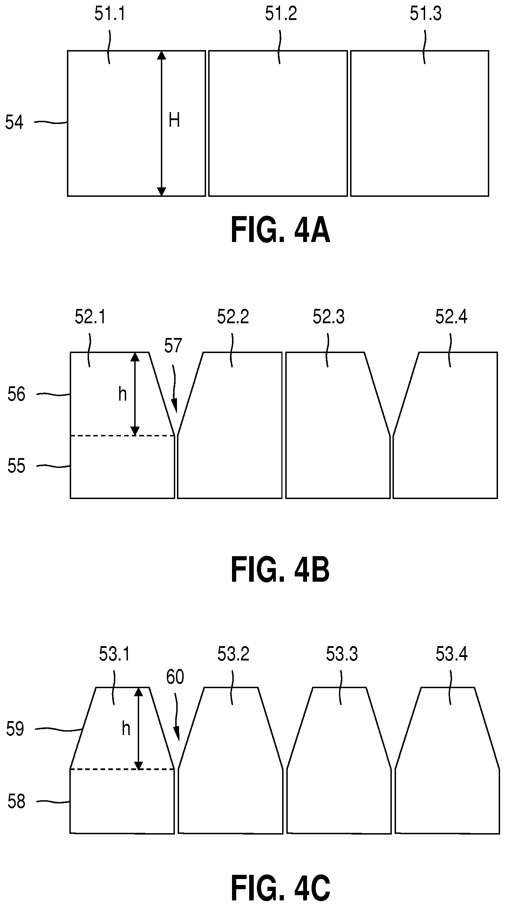

Ein Bohrring wird beim erfindungsgemäßen Verfahren aus mehreren Grünteilen aufgebaut, die zu Ringabschnitten umgeformt werden und zu einem geschlossenen Bohrring gesintert werden; als Geometrie für die Grünteile eignen sich mehreckige Grundflächen. **FIGN. 4A-C** zeigen Grünteile **51** mit einer rechteckigen Grundfläche (FIG. 4A), Grünteile **52** mit einer fünfeckigen Grundfläche (FIG. 4B) und Grünteile **53** mit einer sechseckigen Grundfläche (FIG. 4C).

Die rechteckige Grundfläche **54** der Grünteile 51 stellt die einfachste Geometrie dar, um Bohrringe aus mehreren Ringabschnitten herzustellen. Im Ausführungsbeispiel der FIG. 4A werden drei gleiche Grünteile 51.1, 51.2, 51.3 verwendet, um einen geschlossenen Bohrring herzustellen.

Die fünfeckige Grundfläche der Grünteile 52 lässt sich in ein Rechteck **55** und ein Trapez **56** mit zwei rechten Innenwinkeln unterteilen. Im Bereich des geneigten Trapezschenkels wird beim Sintern mit dem benachbarten Ringabschnitt ein Wasserschlitz **57** erzeugt. Mit einer solchen fünfeckigen Grundfläche wird bei einem Bohrring mit 2n, n ≥ 1 Ringabschnitten eine Anzahl von n Wasserschlitzen 57 erzeugt.

Die sechseckige Grundfläche der Grünteile 53 lässt sich in ein Rechteck **58** und ein gleichschenkliges Trapez **59** unterteilen. Im Bereich der geneigten Trapezschenkel werden beim Sintern mit den benachbarten Ringabschnitten Wasserschlitze **60** erzeugt. Mit einer solchen sechseckigen Grundfläche wird bei einem Bohrring mit n, n ≥ 2 Ringabschnitten eine Anzahl von n Wasserschlitzen 60 erzeugt.

## Patentansprüche

1. Bohrring (21) für eine Kernbohrkrone (10), mit mindestens zwei Ringabschnitten (22.1, 22.2, 23.1, 23.2), die aus einem gesinterten Pulvergemisch (24, 26) und Diamantpartikeln (25, 27) aufgebaut sind und die an den Seitenkanten (41, 42, 43, 44) miteinander verbunden sind, wobei die mindestens zwei Ringabschnitte (22.1, 22.2, 23.1, 23.2) eine Anzahl von n, n ≥ 1 ersten Ringabschnitten (22.1, 22.2) und n zweiten Ringabschnitten (23.1, 23.2) umfassen und die ersten und zweiten Ringabschnitte (22.1, 22.2, 23.1, 23.2) entlang einer Umfangsrichtung des Bohrringes (21) abwechselnd hintereinander angeordnet sind,
**dadurch gekennzeichnet, dass** die ersten Ringabschnitte (22.1, 22.2) aus einem gesinterten ersten Pulvergemisch (24) und ersten Diamantpartikeln (25) aufgebaut sind und die zweiten Ringabschnitte (23.1, 23.2) aus einem gesinterten zweiten Pulvergemisch (26) und zweiten Diamantpartikeln (27) aufgebaut sind.

2. Bohrring nach Anspruch 1, **dadurch gekennzeichnet, dass** das erste Pulvergemisch (24) der ersten Ringabschnitte (22.1, 22.2) und das zweite Pulvergemisch (26) der zweiten Ringabschnitte (23.1, 23.2) übereinstimmen.

3. Bohrring nach einem der Ansprüche 1 bis 2, **dadurch gekennzeichnet, dass** die ersten Diamantpartikel (25) der ersten Ringabschnitte (22.1, 22.2) und die zweiten Diamantpartikel (27) der zweiten Ringabschnitte (23.1, 23.2) die gleiche Diamantverteilung und den gleichen mittleren Diamantdurchmesser aufweisen.

4. Bohrring nach einem der Ansprüche 1 bis 3, **dadurch gekennzeichnet, dass** zwischen den Ringabschnitten (22.1, 22.2, 23.1, 23.2) mindestens ein Wasserschlitz (28.1, 28.2, 28.3, 28.4) vorgesehen ist.

5. Bohrring nach Anspruch 4, **dadurch gekennzeichnet, dass** sich der mindestens eine Wasserschlitz (28.1-28.4) über eine Höhe zwischen 1/3 und 5/6 der Gesamthöhe des Bohrringes (21) erstreckt.

6. Bohrring nach einem der Ansprüche 4 bis 5, **dadurch gekennzeichnet, dass** die Ringabschnitte (23.1, 23.2) eine oder mehrere Bohrungen (29.1, 29.2) aufweisen, die die Innenseite (37) und Außenseite (38) des Bohrringes (21) verbinden.

7. Verfahren zur Herstellung eines Bohrringes (21) für eine Kernbohrkrone (10) nach einem der Ansprüche 1 bis 6, mit den Schritten:
▪ mindestens zwei Grünteile (31, 32) werden aus eingekapselten Diamantpartikeln (33, 34) aufgebaut, wobei Diamantpartikel (25, 27) von einem Pulvergemisch (24, 26) umhüllt sind,
▪ die Grünteile (31, 32) werden unter Druckeinwirkung zu Ringabschnitten (22.1, 22.2, 23.1, 23.2) umgeformt und
▪ die Ringabschnitte (22.1, 22.2, 23.1, 23.2) werden ringförmig zusammengesetzt und unter Temperatureinwirkung zu einem geschlossenen Bohrring gesintert.

8. Verfahren nach Anspruch 7, **dadurch gekennzeichnet, dass** der Bohrring (21) aus einer Anzahl von n, n ≥ 1 ersten Grünteilen (31), die zu ersten Ringabschnitten (22.1, 22.2) umgeformt werden, und n zweiten Grünteilen (32), die zu zweiten Ringabschnitten (23.1, 23.2) umgeformt werden, aufgebaut wird, wobei die ersten und zweiten Ringabschnitte (22.1, 22.2, 23.1, 23.2) entlang einer Umfangsrichtung des Bohrringes (21) abwechselnd hintereinander angeordnet werden.

9. Verfahren nach Anspruch 8, **dadurch gekennzeichnet, dass** die ersten Grünteile (31) aus eingekapselten ersten Diamantpartikeln (33), die ein erstes Pulvergemisch (24) und erste Diamantpartikel (25) enthalten, hergestellt werden und die zweiten Grünteile (32) aus eingekapselten zweiten Diamantpartikeln (34), die ein zweites Pulvergemisch (26) und zweite Diamantpartikel (27) enthalten, hergestellt werden.

10. Verfahren nach Anspruch 7, **dadurch gekennzeichnet, dass** der Bohrring aus einer Anzahl von n ≥ 2 gleichen Grünteilen (51, 52, 53) aufgebaut wird, wobei die Grünteile zu Ringabschnitten umgeformt und entlang einer Umfangsrichtung des Bohrringes hintereinander angeordnet werden.

11. Verfahren nach einem der Ansprüche 7 bis 10, **dadurch gekennzeichnet, dass** die Grünteile (51) mit rechteckigen Grundflächen (54) aufgebaut werden.

12. Verfahren nach einem der Ansprüche 7 bis 10, **dadurch gekennzeichnet, dass** die Grünteile (52) mit fünfeckigen Grundflächen aufgebaut werden, wobei die Grundflächen ein Rechteck (55) und ein Trapez (56) mit zwei rechten Innenwinkeln aufweisen.

13. Verfahren nach einem der Ansprüche 7 bis 10, **dadurch gekennzeichnet, dass** die Grünteile (53) mit sechseckigen Grundflächen aufgebaut werden, wobei die Grundflächen ein Rechteck (58) und ein gleichschenkliges Trapez (59) aufweisen.

14. Verfahren nach Anspruch 7, **dadurch gekennzeichnet, dass** die Ringabschnitte (22.1, 22.2, 23.1, 23.2) beim Sintern einer Temperatur- und Druckeinwirkung unterzogen werden.

15. Verfahren nach Anspruch 14, **dadurch gekennzeichnet, dass** die Ringabschnitte (22.1, 22.2, 23.1, 23.2) durch die Druckeinwirkung beim Sintern einer zusätzlichen äußeren Formgebung unterzogen werden.

## Claims

1. Drill ring (21) for a core drill bit (10), comprising at least two ring segments (22.1, 22.2, 23.1, 23.2) composed of a sintered powder mixture (24, 26) and diamond particles (25, 27) and connected together at the side edges (41, 42, 43, 44), wherein the at least two ring segments (22.1, 22.2, 23.1, 23.2) include a number of n, n ≥ 1 first ring segments (22.1, 22.2) and n second ring segments (23.1, 23.2) and the first and second ring segments (22.1, 22.2, 23.1, 23.2) are arranged alternately one behind the other in the circumferential direction of the drill ring (21),
**characterised in that** the first ring segments (22.1, 22.2) are composed of a sintered first powder mixture (24) and first diamond particles (25) and the second ring segments (23.1, 23.2) are composed of a sintered second powder mixture (26) and second diamond particles (27).

2. Drill ring according to claim 1, **characterised in that** the first powder mixture (24) of the first ring segments (22.1, 22.2) and the second powder mixture (26) of the second ring segments (23.1, 23.2) are identical.

3. Drill ring according to one of claims 1 to 2, **characterised in that** the first diamond particles (25) of the first ring segments (22.1, 22.2) and the second diamond particles (27) of the second ring segments (23.1, 23.2) have the same diamond distribution and the same mean diamond diameter.

4. Drill ring according to one of claims 1 to 3, **characterised in that** at least one water slot (28.1, 28.2, 28.3, 28.4) is provided between the ring segments (22.1, 22.2, 23.1, 23.2).

5. Drill ring according to claim 4, **characterised in that** the at least one water slot (28.1-28.4) extends over a height of between 1/3 and 5/6 of the total height of the drill ring (21).

6. Drill ring according to one of claims 4 to 5, **characterised in that** the ring segments (23.1, 23.2) have one or more bores (29.1, 29.2) connecting the inner face (37) and outer face (38) of the drill ring (21).

7. Method of producing a drill ring (21) for a core drill bit (10) according to one of claims 1 to 6, comprising the steps:
▪ at least two green parts (31, 32) are formed from encapsulated diamond particles (33, 34), wherein diamond particles (25, 27) are enveloped by a powder mixture (24, 26),
▪ the green parts (31, 32) are shaped into ring segments (22.1, 22.2, 23.1, 23.2) by the application of pressure and
▪ the ring segments (22.1, 22.2, 23.1, 23.2) are assembled in a ring shape and sintered to form a continuous drill ring by the application of temperature.

8. Method according to claim 7, **characterised in that** the drill ring (21) is composed of a number of n, n ≥ 1 first green parts (31) shaped into first ring segments (22.1, 22.2) and n second green parts (32) shaped into second ring segments (23.1, 23.2), wherein the first and second ring segments (22.1, 22.2, 23.1, 23.2) are arranged alternately one behind the other in the circumferential direction of the drill ring (21).

9. Method according to claim 8, **characterised in that** the first green parts (31) are produced from encapsulated first diamond particles (33) containing a first powder mixture (24) and first diamond particles (25) and the second green parts (32) are produced from encapsulated second diamond particles (34) containing a second powder mixture (26) and second diamond particles (27).

10. Method according to claim 7, **characterised in that** the drill ring is composed of a number of n ≥ 2 identical green parts (51, 52, 53), wherein the green parts are shaped into ring segments and arranged alternately one behind the other in the circumferential direction of the drill ring.

11. Method according to one of claims 7 to 10, **characterised in that** the green parts (51) are formed with rectangular base surfaces (54).

12. Method according to one of claims 7 to 10, **characterised in that** the green parts (52) are formed with pentagonal base surfaces, wherein the base surfaces comprise a rectangle (55) and a trapezium (56) with two right internal angles.

13. Method according to one of claims 7 to 10, **characterised in that** the green parts (53) are formed with hexagonal base surfaces, wherein the base surfaces comprise a rectangle (58) and an isosceles trapezium (59).

14. Method according to claim 7, **characterised in that** the ring segments (22.1, 22.2, 23.1, 23.2) are subjected to the action of temperature and pressure during sintering.

15. Method according to claim 14, **characterised in that** the ring segments (22.1, 22.2, 23.1, 23.2) are subjected to additional external shaping by the application of pressure during sintering.

## Revendications

1. Couronne de forage (21) pour un trépan de carottage (10), comportant au moins deux segments de couronne (22.1, 22.2, 23.1, 23.2) construits à partir d'un mélange pulvérulent fritté (24, 26) et de particules de diamant (25, 27) et qui sont reliés les uns aux autres au niveau des bords latéraux (41, 42, 43, 44), dans laquelle les au moins deux segments de couronne (22.1, 22.2, 23.1, 23.2) comprennent un ensemble de n , n ≥ 1, premiers segments de couronne (22.1, 22.2) et de n seconds segments de couronne (23.1, 23.2), et les premiers et seconds segments de couronne (22.1, 22.2, 23.1, 23.2) sont agencés les uns derrière les autres de manière alternée le long d'une direction circonférentielle de la couronne de forage (21),
**caractérisée en ce que** les premiers segments de couronne (22.1, 22.2) sont construits à partir d'un premier mélange pulvérulent fritté (24) et de premières particules de diamant (25), et les seconds segments de couronne (23.1, 23.2) sont construits à partir d'un second mélange pulvérulent fritté (26) et de secondes particules de diamant (27).

2. Couronne de forage selon la revendication 1, **caractérisée en ce que** le premier mélange pulvérulent (24) des premiers segments de couronne (22.1, 22.2) et le second mélange pulvérulent (26) des seconds segments de couronne (23.1, 23.2) correspondent.

3. Couronne de forage selon l'une des revendications 1 à 2, **caractérisée en ce que** les premières particules de diamant (25) des premiers segments de couronne (22.1, 22.2) et les secondes particules de diamant (27) des seconds segments de couronne (23.1, 23.2) ont la même répartition des diamants et le même diamètre moyen de diamant.

4. Couronne de forage selon l'une des revendications 1 à 3, **caractérisée en ce qu'**au moins une fente d'eau (28.1, 28.2, 28.3, 28.4) est prévue entre les segments de couronne (22.1, 22.2, 23.1, 23.2).

5. Couronne de forage selon la revendication 4, **caractérisée en ce que** la au moins une fente d'eau (28.1 à 28.4) s'étend sur une hauteur comprise entre 1/3 et 5/6 de la hauteur totale de la couronne de forage (21).

6. Couronne de forage selon l'une des revendications 1 à 5, **caractérisée en ce que** les segments de couronne (23.1, 23.2) comportent un ou plusieurs trous (29.1, 29.2) qui relient le côté intérieur (37) et le côté extérieur (38) de la couronne de forage (21).

7. Procédé pour fabriquer une couronne de forage (21) pour un trépan de carotteuse (10) selon l'une des revendications 1 à 6, comportant les étapes consistant à :
▪ fabriquer au moins deux pièces vertes (31, 32) à partir de particules de diamant encapsulées (33, 34), des particules de diamant (25, 27) étant enrobées d'un mélange pulvérulent (24, 26),
▪ transformer les pièces vertes (31, 32) en segments de couronne (22.1, 22.2, 23.1, 23.2) sous l'action d'une pression et
▪ assembler annulairement les segments de couronne (22.1, 22.2, 23.1, 23.2) et les fritter pour obtenir une couronne de forage fermée sous l'action d'une température.

8. Procédé selon la revendication 7, **caractérisé en ce que** la couronne de forage (21) est formée à partir d'un ensemble de n, n ≥ 1, premières pièces vertes (31) qui sont transformées en premiers segments de couronne (22.1, 22.2), et de n secondes pièces vertes (32) qui sont transformées en seconds segments de couronne (23.1, 23.2), dans lequel les premiers et seconds segments de couronne (22.1, 22.2, 23.1, 23.2) sont agencés les uns derrière les autres de manière alternée le long d'une direction circonférentielle de la couronne de forage (21) .

9. Procédé selon la revendication 8, **caractérisé en ce que** les premières pièces vertes (31) sont fabriquées à partir de premières particules de diamant encapsulées (33) qui contiennent un premier mélange pulvérulent (24) et des premières particules de diamant (25), et les secondes pièces vertes (32) sont fabriquées à partir de secondes particules de diamant encapsulées (34) qui contiennent un second mélange pulvérulent (26) et des secondes particules de diamant (27).

10. Procédé selon la revendication 7, **caractérisé en ce que** la couronne de forage est fabriquée à partir d'un ensemble de n ≥ 2 pièces vertes (51, 52, 53) identiques, dans lequel les pièces vertes sont transformées en segments de couronne et sont agencées les unes derrière les autres le long d'une direction circonférentielle de la couronne de forage.

11. Procédé selon l'une des revendications 7 à 10, **caractérisé en ce que** les pièces vertes (51) sont fabriquées avec des surfaces de base rectangulaires (54).

12. Procédé selon l'une des revendications 7 à 10, **caractérisé en ce que** les pièces vertes (52) sont fabriquées avec des surfaces de base pentagonales, dans lequel les surfaces de base comportent un rectangle (55) et un trapèze (56) avec deux angles intérieurs droits.

13. Procédé selon l'une des revendications 7 à 10, **caractérisé en ce que** les pièces vertes (53) sont fabriquées avec des surfaces de base hexagonales, dans lequel les surfaces de base comportent un rectangle (58) et un trapèze isocèle (59).

14. Procédé selon la revendication 7, **caractérisé en ce que** les segments de couronne (22.1, 22.2, 23.1, 23.2) sont soumis à l'action d'une température et d'une pression lors du frittage.

15. Procédé selon la revendication 14, **caractérisé en ce que** les segments de couronne (22.1, 22.2, 23.1, 23.2) sont soumis à une conformation externe supplémentaire sous l'action d'une pression lors du frittage.
